# EUROPEAN PATENT APPLICATION

(11) **EP 4 757 439 A2**
(43) Date of publication of application: **10.06.2026**
(21) Application number: 26158884.2
(22) Date of filing: 19.04.2021
(51) Int. Cl.: H04W 52/50

(54) **RANDOM ACCESS CONFIGURATION AND PROCEDURE IN FULL-DUPLEX OPERATION**

(62) Divisional of application: 24183084.3
(71) Applicant: QUALCOMM Incorporated, San Diego, CA 92121-1714 (US)
(72) Inventor: ZHENG, Ruiming, San Diego, 92121-1714 (US); ABDELGHAFFAR, Muhammad Sayed Khairy, San Diego, 92121-1714 (US); HE, Linhai, San Diego, 92121-1714 (US); IBRAHIM, Abdelrahman Mohamed Ahmed Mohamed, San Diego, 92121-1714 (US); ABOTABL, Ahmed Attia, San Diego, 92121-1714 (US); LEI, Jing, San Diego, 92121-1714 (US); MUKKAVILLI, Krishna Kiran, San Diego, 92121-1714 (US); KWON, Hwan Joon, San Diego, 92121-1714 (US)
(74) Representative: Jaeger, Michael David

(57) **Abstract**

The present disclosure relates to methods and devices for wireless communication at an apparatus, e.g., a UE or a base station. The base station may be configured to configure one or more RACH resources for a FD RACH configuration and transmit, to at least one UE, an indication of the one or more RACH resources configured for the FD RACH configuration. The UE may be configured to receive the indication of the FD RACH configuration for the one or more RACH resources. The UE may further be configured to select, based on the received indication, at least one RACH resource of the one or more RACH resources for the FD RACH configuration and transmit, to the first base station via the selected at least one RACH resource, at least one message of a RACH procedure based on the FD RACH configuration.

## Description

### BACKGROUND

### Technical Field

The present disclosure relates generally to communication systems, and more particularly, to a random access channel (RACH) configuration and procedure in full-duplex (FD) operation.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In some aspects of wireless communication, e.g., 5G NR, FD communication is enabled. In FD communication some time-domain resources (e.g., slots) may include both downlink (DL) and uplink (UL) transmissions, e.g., in overlapping frequency bands (e.g., in-band full duplex (IBFD)) or in adjacent frequency bands (e.g., sub-band full duplex (SBFD)). It may be beneficial to utilize FD resources for RACH procedures as well as half duplex (HD) resources.

In an aspect of the disclosure, a method, a computer-readable medium, and an apparatus are provided. The apparatus may be a device at a base station. The device may be a processor and/or modem at a base station or the base station itself. The base station may be configured to configure one or more RACH resources for a FD RACH configuration. The base station may further be configured to transmit, to at least one UE, an indication of the one or more RACH resources configured for the FD RACH configuration. The base station may also be configured to receive, from the at least one UE via the one or more RACH resources, at least one message of a RACH procedure based on the FD RACH configuration.

In some aspects, the base station may be configured to configure a set of RACH resources for a HD RACH configuration. The base station may further be configured to transmit, to the at least one UE, an indication of the set of RACH resources configured for the HD RACH configuration. The base station may also be configured to determine a threshold number of failed FD RACH procedure messages for the at least one UE before switching to a HD RACH procedure; transmit, to the at least one UE, an indication of the determined threshold; and receive, from the at least one UE via the set of RACH resources configured for the HD RACH configuration, at least one message of a RACH procedure based on the HD RACH configuration after a threshold number of failed FD RACH procedure messages transmitted by the at least one UE. In some aspects, the base station may be configured to receive, from the at least one UE, an indication of a capability of the at least one UE indicating that the at least one UE supports the FD RACH configuration. The base station may also be configured to determine (1) a radio resource control (RRC) state of the at least one UE, (2) a RACH type associated with the at least one UE, and/or (3) a type of communication associated with the at least one UE.

In an aspect of the disclosure, a method, a computer-readable medium, and an apparatus are provided. The apparatus may be a device at a UE. The device may be a processor and/or modem at a UE or the UE itself. The UE may be configured to receive, from a first base station, an indication of a FD RACH configuration for one or more RACH resources. The UE may further be configured to select, based on the received indication, at least one RACH resource of the one or more RACH resources for the FD RACH configuration. The UE may also be configured to transmit, to the first base station via the selected at least one RACH resource, at least one message of a RACH procedure based on the FD RACH configuration.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and user equipment (UE) in an access network.
FIG. 4 is a diagram illustrating example resource allocations for IBFD mode communication and SBFD mode communication.
FIG. 5 is a diagram illustrating a first set of time-and-frequency resources for a FD RACH occasion and a second set of time-and-frequency resources for a HD RACH occasion.
FIG. 6 is a call flow diagram of a method of wireless communication.
FIG. 7 is a call flow diagram illustrating a transition from a FD RACH procedure to a HD RACH procedure.
FIG. 8 is a call flow diagram illustrating a FD RACH procedure utilizing a fallback indication bit.
FIG. 9 is a flowchart of a method of wireless communication.
FIG. 10 is a flowchart of a method of wireless communication.
FIG. 11 is a flowchart of a method of wireless communication.
FIG. 12 is a flowchart of a method of wireless communication.
FIG. 13 is a flowchart of a method of wireless communication.
FIG. 14 is a diagram illustrating an example of a hardware implementation for an example apparatus.
FIG. 15 is a diagram illustrating an example of a hardware implementation for an example apparatus.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

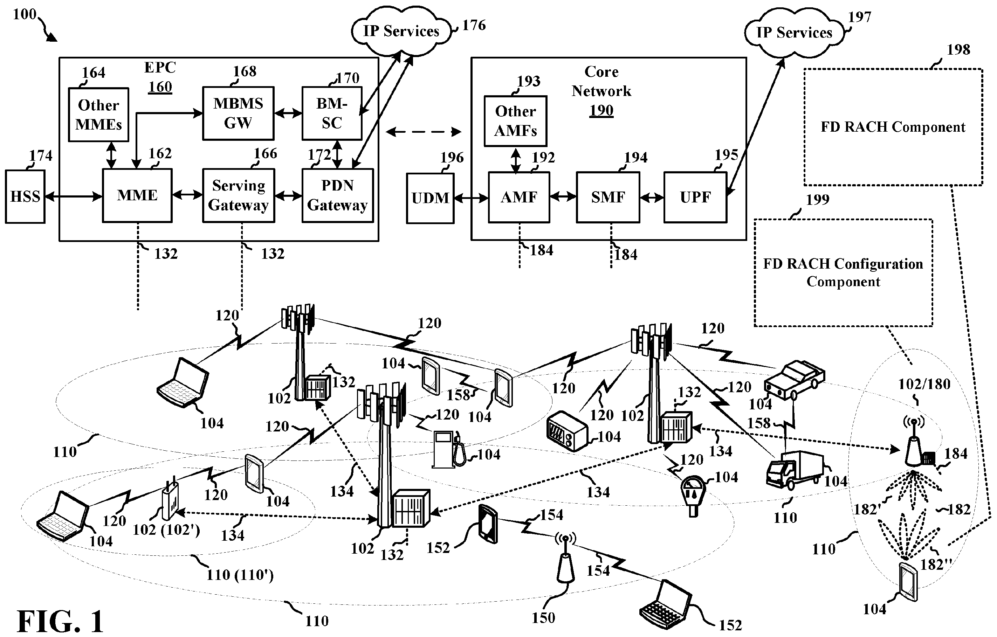

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100, 400, etc. MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Referring again to FIG. 1, in certain aspects, the UE 104 may include a FD RACH component 198 that may be configured to receive, from a first base station, an indication of a FD RACH configuration for one or more RACH resources; select, based on the received indication, at least one RACH resource of the one or more RACH resources for the FD RACH configuration; and transmit, to the first base station via the selected at least one RACH resource, at least one message of a RACH procedure based on the FD RACH configuration. In certain aspects, the base station 180 may include a FD RACH configuration component 199 that may be configured to configure one or more RACH resources for a FD RACH configuration; transmit, to at least one UE, an indication of the one or more RACH resources configured for the FD RACH configuration; and receive, from the at least one UE via the one or more RACH resources, at least one message of a RACH procedure based on the FD RACH configuration. Although the following description may be focused on 5G NR, the concepts described herein may be applicable to other similar areas, such as LTE, LTE-A, CDMA, GSM, and other wireless technologies.

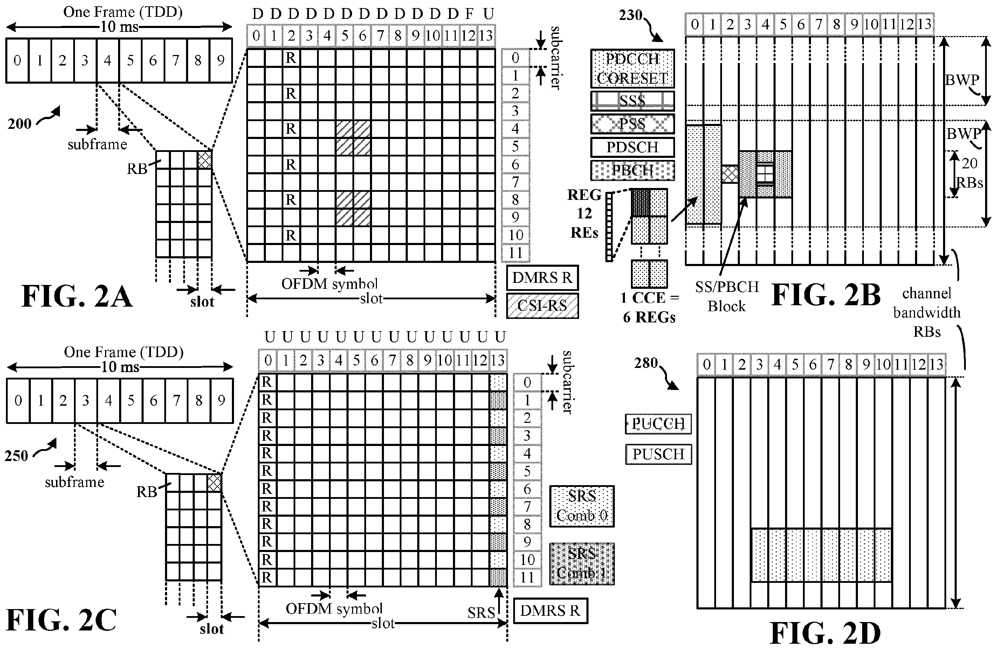

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

Other wireless communication technologies may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) orthogonal frequency division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 4 allow for 1, 2, 4, 8, and 16 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2^{µ} slots/subframe. The subcarrier spacing and symbol length/duration are a function of the numerology. The subcarrier spacing may be equal to 2*^{µ}* * 15 kHz, where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of slot configuration 0 with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgment (ACK) (HARQ-ACK) information (ACK / negative ACK (NACK)) feedback. The PUSCH carries data, and may additionally be used to carry a buffer status report (BSR), a power headroom report (PHR), and/or UCI.

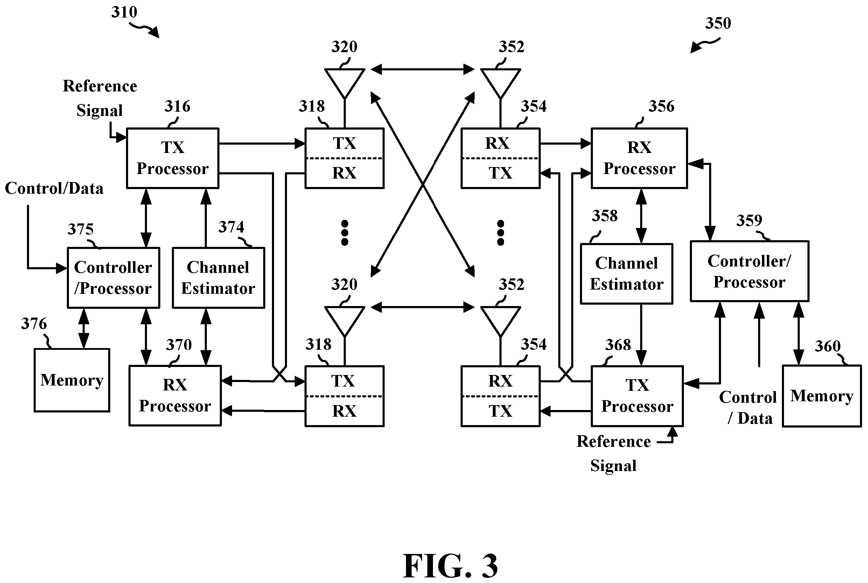

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318 TX. Each transmitter 318 TX may modulate an RF carrier with a respective spatial stream for transmission.

At the UE 350, each receiver 354 RX receives a signal through its respective antenna 352. Each receiver 354 RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354 TX. Each transmitter 354 TX may modulate an RF carrier with a respective spatial stream for transmission.

The UL transmission is processed at the base station 310 in a manner similar to that described in connection with the receiver function at the UE 350. Each receiver 318 RX receives a signal through its respective antenna 320. Each receiver 318 RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with 198 of FIG. 1. At least one of the TX processor 316, the RX processor 370, and the controller/processor 375 may be configured to perform aspects in connection with 199 of FIG. 1.

In some aspects of wireless communication, e.g., 5G NR, FD communication is enabled. In FD communication some time-domain resources (e.g., slots) may include both DL and UL transmissions, e.g., in overlapping frequency bands (e.g., in-band full duplex (IBFD)) or in adjacent frequency bands (e.g., sub-band full duplex (SBFD)). It may be beneficial to utilize FD resources for RACH procedures as well as HD resources.

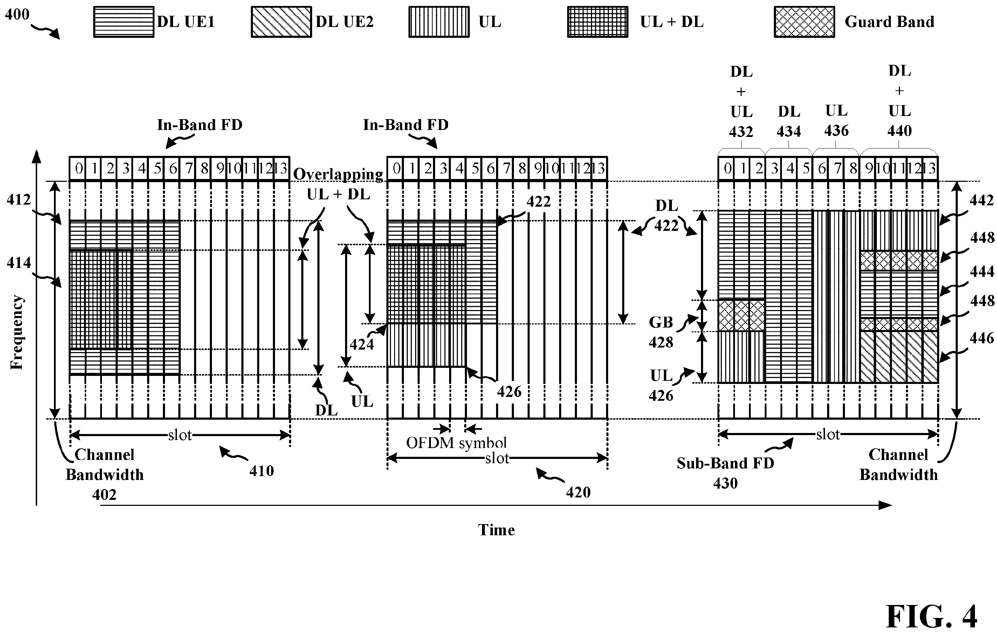

FIG. 4 is a diagram 400 illustrating example resource allocations for IBFD mode communication and SBFD mode communication. Diagram 400 illustrates a set of slots in a particular channel having a particular channel bandwidth 402. A first example slot 410 for IBFD may include a set of DL time-and-frequency resources (e.g., resources) 412 and a set of fully-overlapping UL resources. A second example slot 420 for IBFD may include a set of DL resources 422 and a set of partially-overlapping UL resources 426 including a subset of overlapping UL resources 424. The overlapping DL and UL resources 414 and 424 indicate time-and-frequency resources that are used for both UL and DL (e.g., using different beam directionality or other self-interference canceling or mitigating methods).

In some aspects, a set of SBFD slots may include a "D+U" format in which each symbol may contain DL resources, UL resources, or both DL and UL resources. For example, an example slot 430 for SBFD may include non-overlapping sets of UL resources 426, DL resources 422, and guard band resources 428 in a set of DL + UL slots 432. Slot 430 may also include a set of slots 434 that include solely DL resources and a set of slots 436 that include solely UL resources. In some aspects, a set of symbols 440 that may include UL resources 442 for communicating UL data from a first UE (e.g., UE1), DL resources 444 for transmitting DL data to a first UE (e.g., UE1), and UL resources 446 for communicating UL data from a second UE (e.g., UE 2) and a set of guard bands 448 separating the different sets of UL and DL resources. The guard band 448 separating UL resources 442 and DL resources 444 associated with UE1 may include more frequency resources than the guard band 448 separating DL resources 444 associated with UE1 and UL resources 446 associated with UE 2.

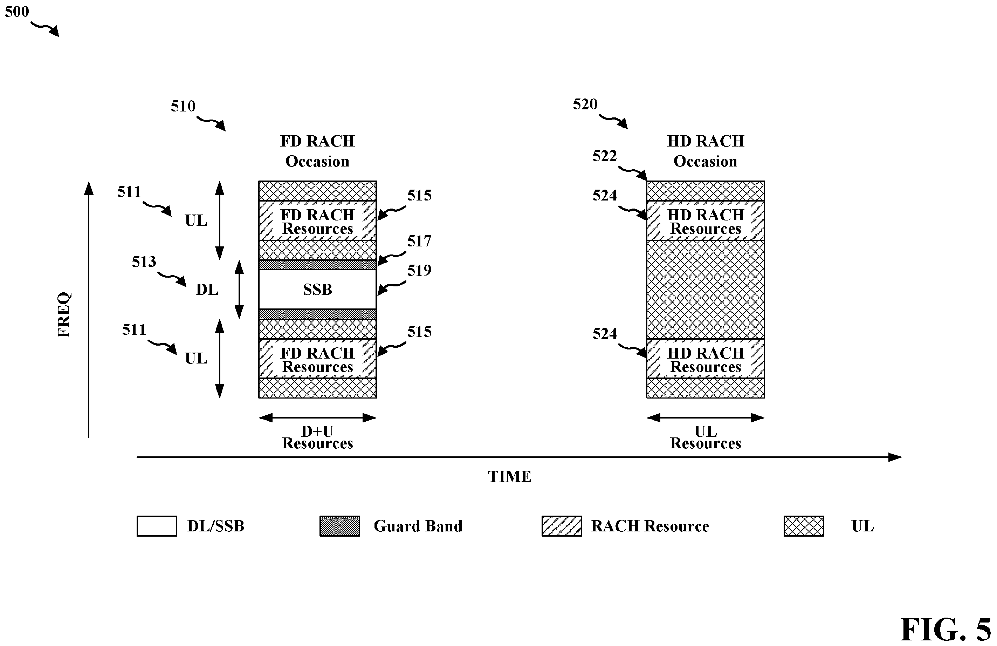

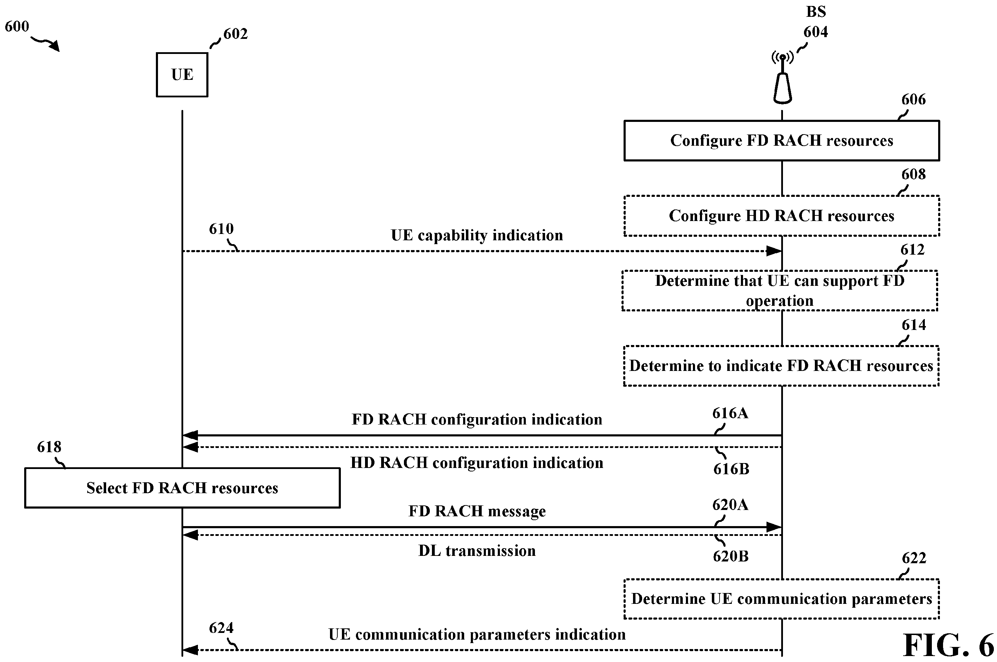

FIG. 5 is a diagram 500 illustrating a first set of time-and-frequency resources 510 for a FD RACH occasion and a second set of time-and-frequency resources 520 for a HD RACH occasion. The first set of time-and-frequency resources 510 for the FD RACH occasion includes a set of UL resources 511 and a set of DL resources 513. The UL resources 511 include FD RACH resources 515. A base station may receive, and a UE may transmit, a FD RACH message (e.g., MsgA or Msg1/Msg3) via FD RACH resources 515. Diagram 500 further illustrates a synchronization signal block (SSB) 519 in the set of DL resources 513 separated from the FD RACH resources 515 by a guard band 517. In some aspects, the set of DL resources 513 may include a DL control or data transmission (e.g., PDCCH, PDSCH). The base station may configure the FD RACH resources 515 and a set of one or more FD RACH occasions 510 and may transmit an indication of the configured FD RACH resources to a set of one or more UEs, as described in further detail in relation to FIGs. 6-8 below.

Diagram 500 also illustrates an example HD RACH occasion 520. The HD RACH occasion 520, in some aspects, is configured or scheduled by a base station to occur during a time period in which UL transmissions (e.g., PUCCH, PUSCH, etc.) are scheduled. The HD RACH occasion may include sets of HD RACH time-and-frequency resources 524 along with UL resources 522. In some aspects, the HD RACH occasion is configured to allow UEs that do not support a FD mode of operation to perform a (HD) RACH procedure. The HD RACH occasion(s) 520, in some aspects, may allow FD-capable UEs (e.g., UEs that are capable of supporting a FD mode of operation) to perform a HD RACH procedure if a FD RACH procedure (e.g., via RACH occasion(s) 510) fails. For example, a FD RACH procedure may fail if the FD-capable UE experiences self-interference that is above a threshold (e.g., a signal-strength threshold) or that causes a simultaneous transmission to be received with a signal quality below a threshold. (e.g., a signal-quality threshold). As illustrated in diagrams 510 and 520, the FD RACH resources 515 and the HD RACH resources 524 may be included in distinct sets of RACH resources of a FD RACH configuration and a HD RACH configuration.

In some aspects, the FD RACH configuration includes a first power configuration and the HD RACH configuration includes a second power configuration. The first power configuration, in some aspects, includes at least one of a first initial power parameter or a first power ramping parameter and the second power configuration includes at least one of a second initial power parameter or a second power ramping parameter. In some aspects, the first initial power parameter is different from the second initial power parameter and/or the first power ramping parameter is different from the second power ramping parameter. The FD RACH configuration and the HD RACH configuration may include a set of contention-based RACH resources and a set of contention-free RACH resources.

FIG. 6 is a call flow diagram 600 of a method of wireless communication. Optional steps are indicated with dotted lines. Diagram 600 illustrates a UE 602 performing a FD RACH procedure with a base station 604. A base station 604 may configure 606 one or more RACH resources for a FD RACH configuration. For example, the base station 604 may configure (and schedule) a set of FD RACH occasions in a set of time-and-frequency resources. The RACH resources associated with the FD RACH configuration may be associated with a set of FD RACH preambles and may include at least one FD RACH occasion that overlaps with a scheduled DL transmission. Configuring the FD RACH resources may include determining a threshold number of failed FD RACH procedure messages for the at least one UE (e.g., UE 602) before switching to a HD RACH procedure.

In some aspects, the base station 604 may configure a set of RACH resources for a HD RACH configuration. The HD RACH resources associated with the HD RACH configuration may be associated with a set of HD RACH preambles that are distinct from the set of preambles that are associated with the FD RACH configuration. In some aspects, the HD RACH occasions (and the set of HD RACH resources) are distinct from the FD RACH occasions (and the set of FD RACH resources). For example, the FD RACH configuration and the HD RACH configurations may be associated with different preamble formats or sequence parameters.

The FD RACH configuration, in some aspects, includes a first power configuration and the HD RACH configuration includes a second power configuration. Each of the first and second power configurations may include at least one of an initial power parameter or a power ramping parameter. In some aspects, at least one of the initial power parameter or the power ramping parameter is different for the FD RACH configuration and for the HD RACH configuration.

The base station 604 may receive, and the UE 602 may transmit, a UE-capability indication 610 that indicates that the UE 602 supports a FD mode of operation. Based on the received UE-capability indication 610, the base station 604 may determine 612 that the UE 602 supports a FD mode of operation (e.g., supports a FD RACH procedure). Based on the determination 612 that the UE can support FD operation, the base station 604 may determine 614 to indicate the FD RACH resources to the UE 602. The base station 604 may also be configured to determine 614 to indicate the FD RACH resources to the UE 602 based on a determination of (1) a radio resource control (RRC) state of the at least one UE, (2) a RACH type associated with the at least one UE, and/or (3) a type of communication associated with the at least one UE. For example, FD RACH resources may not be indicated (or configured) for initial access, while FD RACH resources may be indicated (or configured) for a UE in an RRC connected state. Additionally, FD RACH resources may be indicated (or configured) for a 4-step RACH procedure, while HD RACH resources may be indicated (or configured) for a 2-step RACH procedure. For a RACH procedure associated with a target cell during a handover, in some aspects, FD RACH resources may be indicated for eMBB traffic, while FD RACH resources are not indicated for URLLC traffic.

Once the base station 604 determines 614 to indicate the FD RACH resources to the UE 602, the base station 604 may transmit, and the UE 602 may receive, a FD RACH configuration indication 616A. The base station 604 may additionally transmit, and the UE 602 may receive, a HD configuration indication 616B. The FD RACH configuration indication 616A may indicate a set of FD RACH occasions (e.g., sets of time-and-frequency resources configured for a FD RACH procedure) via which the UE 602 may transmit FD RACH messages. For example, referring to FIG. 5, the FD RACH configuration indication 616A may identify a FD RACH occasion 510 and the time-and-frequency resources configured for UL and DL during the FD RACH occasion 510. The HD RACH configuration indication 616B may indicate a set of HD RACH occasions (e.g., sets of time-and-frequency resources configured for a HD RACH procedure) via which the UE 602 may transmit HD RACH messages. For example, referring to FIG. 5, the HD RACH configuration indication 616B may identify a HD RACH occasion 520 and the time-and-frequency resources configured for UL and DL during the HD RACH occasion 520.

In some aspects, the FD RACH configuration indication 616A may include a determined threshold number of failed FD RACH procedure messages for the at least one UE (e.g., UE 602) before switching to a HD RACH procedure based on HD configuration indication 616B. The FD RACH configuration indication 616A and the HD RACH configuration indication, in some aspects are transmitted via one of system information (SI) or RRC signaling.

The UE 602 may select at least one FD RACH resource indicated in the FD RACH configuration indication 616A. The at least one RACH resource of the one or more RACH resources for the FD RACH configuration may be selected 618, in some aspects, based on at least one of (1) a traffic type (e.g., enhanced mobile broadband (eMMB) or ultra-reliable low-latency communication (URLLC)), (2) a determination that a DL reference signal received power (RSRP) is above a threshold, or (3) an indication from the first base station of at least one FD RACH resource. For example, the UE may select FD resources for eMBB traffic, while the UE may not select FD resources for URLLC traffic. Additionally, a UE may select FD resources when the DL RSRP is above the threshold. In some aspects, the UE may select FD resources based on an indication from the first base station, where the indication may be provided in an RRC configuration message.

Based on selecting 618 FD RACH resources, the UE 602 may transmit a FD RACH message 620A (e.g., a first RACH message (e.g., a MsgA or Msg1) in a two-step or four-step RACH procedure) via a set of UL frequency resources (e.g., UL resources 511) in a particular set of time-and-frequency resources (e.g., FD RACH occasion 510) indicated in the FD RACH configuration indication 616A. The base station 604, may receive the FD RACH message 620A (e.g., via FD RACH resources 515 in UL resources 511). In some aspects, base station 604 may transmit, and UE 602 may receive, a DL transmission 620B in a set of DL frequency resources (e.g., DL resources 513) in the particular set of time-and-frequency resources (e.g., FD RACH occasion 510) indicated in the FD RACH configuration indication 616A (e.g., in the same set of time resources as the FD RACH message 620A transmitted via FD RACH resources 515 in UL resources 511).

Based on the FD RACH message 620A (and at least one additional FD RACH message (MsgB or Msg2/Msg3/Msg4 not shown for clarity), the base station 604 may determine 622 UE communication parameters. For example, the base station 604 may determine 622, based on the FD RACH procedure, that the UE 602 is allowed to operate in a FD mode (e.g., allowed to transmit UL data at a configured power transmission power at a same time as the base station 604 transmits DL data). In some aspects, the base station 604 may determine 622, based on the FD RACH procedure, that the at least one UE is not allowed to operate in a FD mode (e.g., not allowed to transmit UL data at a same time as the base station transmits DL data). If the UE 602 is allowed to operate in a FD mode, the configured power may be a reduced power that may be indicated in one of L1 signaling, a dedicated RRC message, or a fixed value (e.g., a pre-configured power value) in the system information or RRC signaling.

The base station 604 may transmit, and UE 602 may receive, UE communication parameters indication 624. The UE communication parameters indication 624 may include an indication that the UE 602 is allowed (or is not allowed) to communicate in a FD mode. In some aspects, the UE communication parameters indication 624 may also include an indication of the configured (e.g., reduced) UL transmission power determined 622 by the base station 604. The UE communication parameters indication 624 may include an indication that the UE 602 may receive DL transmissions from base station 604 while transmitting UL transmissions (e.g., RACH messages) to a second base station (e.g., during a handover procedure). Additionally, the UE communication parameters indication 624 may include an indication of a relative (e.g., higher or lower) priority of transmitting UL transmissions and receiving DL transmission in resources associated with one or more of a configured grant, a dynamic grant, SRS, PUCCH, and PUSCH. The UE communication parameters indication 624, in some aspects, may include an indication that the UE 602 in an RRC idle state may simultaneously receive DL transmissions from base station 604 and transmit UL transmissions to base station 604 when transitioning to an RRC connected state.

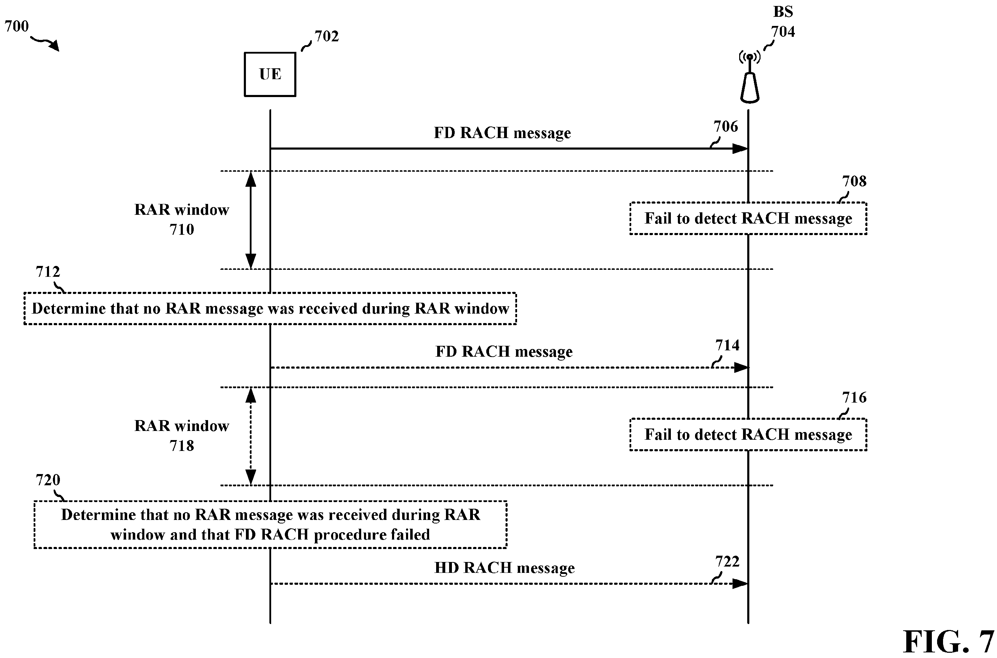

FIG. 7 is a call flow diagram 700 illustrating a transition from a FD RACH procedure to a HD RACH procedure. Optional steps are indicated with dotted lines. The call flow diagram 700 assumes that base station 704 has already transmitted, and UE 702 has already received, a FD RACH configuration (e.g., 616A) and a HD RACH configuration (e.g., 616B) and selected 618 FD RACH resources for a FD RACH procedure. Diagram 700 illustrates a FD-capable UE 702 attempting to establish a connection with a base station 704. The UE 702 may transmit at least one FD RACH message 706 of a FD RACH procedure (e.g., Msg1 of a four-step RACH procedure or MsgA of a two-step RACH procedure) to the base station 704. For example, referring to FIGs. 5 and 6, the UE 702 may transmit the FD RACH message 706 (e.g., FD RACH message 620A) in a FD RACH occasion 510 via FD RACH resources 515.

The base station 704 may fail 708 to detect the FD RACH message 706. For example, the base station may not receive, e.g., due to self-interference, the FD RACH message 706 with a threshold signal strength or signal quality for decoding or even for recognizing the FD RACH message 706 as a RACH message. In some aspects, because the base station 704 fails 708 to detect the FD RACH message 706, the base station 704 may not transmit a random access response (RAR) during a RAR window 710. For example, referring to FIGs. 5 and 6, the base station 704 may experience self-interference based on the base station 704 transmitting a DL transmission (e.g., DL transmission 620B) in a same time resource (e.g., via DL resources 513 during a FD RACH occasion 510) as the UE transmits the FD RACH message 706 (e.g., FD RACH message 620A transmitted via FD RACH resources 515 of the FD RACH occasion 510).

The UE may determine 712 that no RAR (e.g., a Msg2 or MsgB) was received from the base station 704 during the RAR window 710. Based on not receiving a RAR during the RAR window 710, the UE 702 may retransmit FD RACH message 714 (e.g., in a set of one or more additional FD RACH messages) with a different power based on power control information (e.g., initial power and power ramping parameters) received from the base station 704 for the FD RACH configuration (e.g., in FD RACH configuration indication 616A of FIG. 6). As described in relation to FD RACH message 706, the base station 704 may fail 716 to detect the FD RACH message 714 and may not transmit a RAR during a RAR window 718.

The UE may determine 720 that no RAR was received from the base station 704 during the RAR window 718 and, based on the failure to receive a RAR, that the FD RACH procedure has failed. For example, the FD RACH message 714 may have been a last (re)transmitted FD RACH message (e.g., a FD RACH message using a highest configured transmission power) in a set of FD RACH messages using progressively higher transmission power. For another example, the FD RACH message 714 may have been a last (re)transmitted FD RACH message in a number of failed FD RACH messages retransmitted via FD RACH resource 515 with a configured transmission power, where the number of failed FD RACH messages meets or exceeds a threshold used to determine that a RACH procedure has failed. Based on the determination 720, the FD-capable UE 702 may transmit a HD RACH message (e.g., a Msg1 or MsgA) to initiate a HD RACH procedure. For example, referring to FIG. 5, FD-capable UE 702 may transmit FD RACH messages 706 and 714 via FD RACH resources 515 of different FD RACH occasions 510. After determining 720 that the FD RACH procedure failed, the FD-capable UE 702 may transmit HD RACH message 722 via HD RACH resources 524 of HD RACH occasion 520. The HD RACH message 722 may be transmitted via the HD RACH resources and may include a preamble associated with the HD RACH configuration.

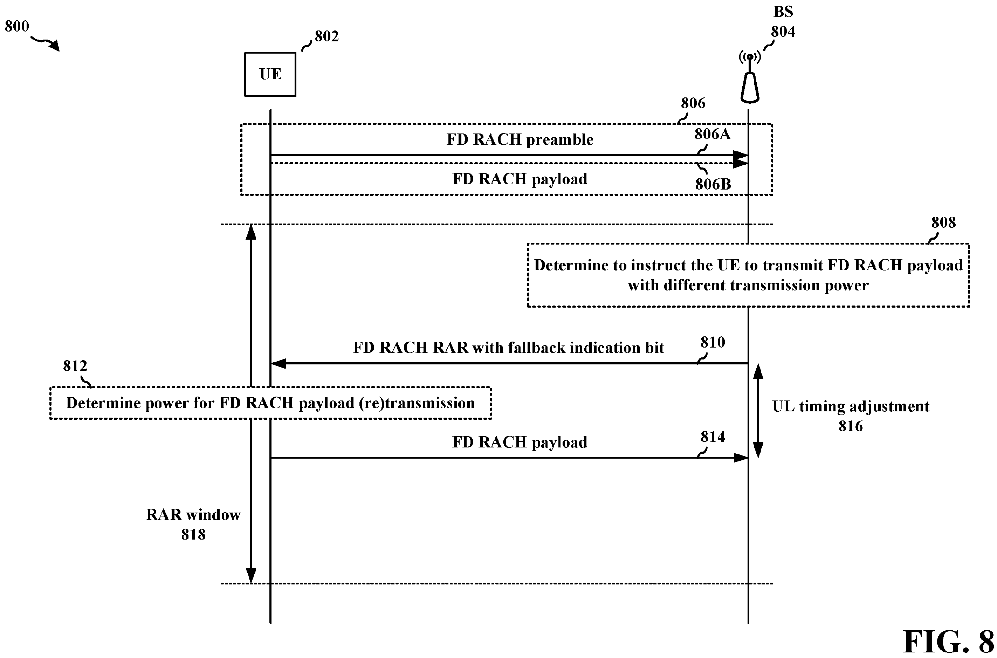

FIG. 8 is a call flow diagram 800 illustrating a FD RACH procedure utilizing a fallback indication bit. Optional steps are indicated with dotted lines. The call flow diagram 800 assumes that base station 804 has already transmitted, and UE 802 has already received, a FD RACH configuration (e.g., 616A) and a HD RACH configuration (e.g., 616B) and selected 618 FD RACH resources for a FD RACH procedure. Diagram 800 illustrates a FD-capable UE 802 and a base station 804. UE 802 may transmit a first FD RACH message 806 (e.g., a Msg1 or MsgA) that may be received at base station 804. The first FD RACH message 806 may include a FD RACH preamble 806A (e.g., a preamble from the set of preambles associated with the FD RACH configuration) and a FD RACH payload 806B. The base station 804 may receive the first FD RACH message 806 and determine 808 to instruct the UE 802 to transmit (or retransmit) a FD RACH payload 806B with a different transmission power.

Based on the determination 808 to instruct the UE 802 to transmit a FD RACH payload 806B with a different transmission power, the base station 804 may transmit, and UE 802 may receive, a FD RACH RAR with a fallback indication bit 810. The FD RACH RAR with a fallback indication bit 810 may be a Msg2 or a MsgB and the fallback indication bit may be a bit in a FD RACH RAR that indicates to a receiving UE that a different transmission power should be used for at least one subsequent RACH transmission.

The UE may receive the FD RACH RAR with a fallback indication bit 810 during RAR window 818. Based on the FD RACH RAR 810, the UE 802 may determine a transmission power for a FD RACH payload transmission (or retransmission, if the first FD RACH transmission 806 included a FD RACH payload 806B). The UE 802 may then (re)transmit a FD RACH payload 814 using an UL timing adjustment 816.

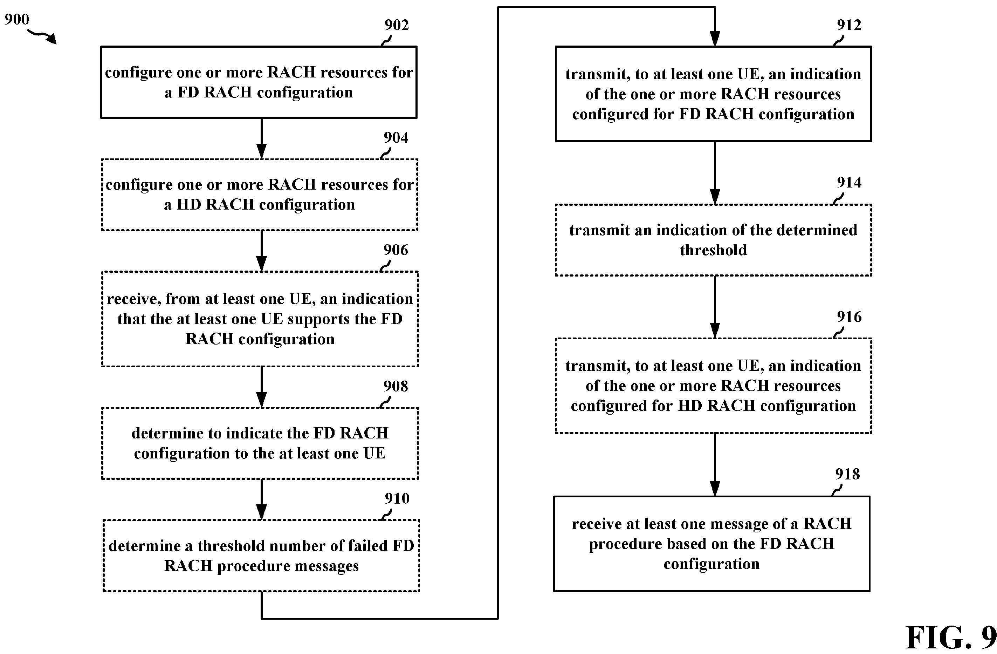

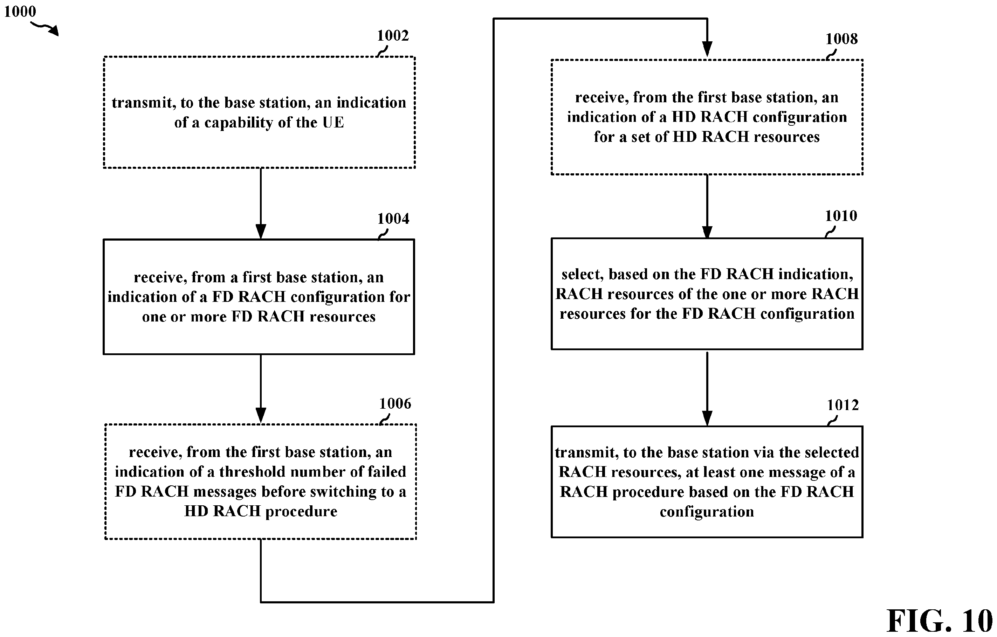

FIG. 9 is a flowchart 900 of a method of wireless communication. The method may be performed by a base station (e.g., the base station 102/180; the base station 604/704/804; the apparatus 1502). FIG. 10 is a flowchart 1000 of a method of wireless communication. The method may be performed by a UE (e.g., the UE 104; the UE 602/702/802; the apparatus 1402). Optional steps are indicated by dotted lines. The following discussion will describe certain steps of FIGs. 9 and 10 together where they represent related steps (operations) performed by the base station (e.g., in FIG. 9) and the UE (e.g., in FIG. 10). At 902, the base station may configure one or more RACH resources for a FD RACH configuration. For example, referring to FIGs. 5 and 6, the base station 604 may configure 606 (schedule) a set of FD RACH occasions 510 in a set of time-and-frequency resources 515. The FD RACH resources 515 associated with the FD RACH configuration may be associated with a set of FD RACH preambles (e.g., using specific formats or sequences) and may include at least one FD RACH occasion 510 that overlaps with a scheduled DL transmission 519. For example, 902 may be performed by RACH configuration component 1540 of apparatus 1502.

At 904, the base station may configure a set of RACH resources for a HD RACH configuration. For example, referring to FIGs. 5 and 6, the base station 604 may configure 608 (schedule) a set of HD RACH occasions 520 in a set of time-and-frequency resources 524. The HD RACH resources 524 associated with the HD RACH configuration may be associated with a set of HD RACH preambles (e.g., using specific formats or sequences) that are distinct form the set of FD RACH preambles. The HD RACH resources 524 associated with the HD RACH configuration and the FD RACH resources 515 associated with the FD RACH configuration may be distinct, such that the base station may be able to identify whether a RACH message is associated with a FD RACH configuration or a HD RACH configuration. For example, 904 may be performed by RACH configuration component 1540 of apparatus 1502.

In some aspects, the FD RACH configuration includes a first power configuration and the HD RACH configuration includes a second power configuration. The first power configuration, in some aspects, includes at least one of a first initial power parameter or a first power ramping parameter and the second power configuration includes at least one of a second initial power parameter or a second power ramping parameter. In some aspects, the first initial power parameter is different from the second initial power parameter and/or the first power ramping parameter is different from the second power ramping parameter. The FD RACH configuration and the HD RACH configuration may include a set of contention-based RACH resources and a set of contention-free RACH resources.

At 1002, the UE may transmit and the base station may receive, at 906, an indication of a capability of the UE indicating that the UE supports the FD RACH configuration (e.g., supports a FD mode of communication), where the indication of the one or more RACH resources configured for the FD RACH configuration may be transmitted, at 914, based on the received indication. At 908, the base station may determine to transmit the FD RACH configuration indication to the at least one UE. The determination, at 908, may be based on the received indication of the UE capability. In some aspects, the determination, at 908, may be based on a determination of (1) an RRC state of the at least one UE, (2) a RACH type associated with the at least one UE, and/or (3) a type of communication associated with the at least one UE. For example, the base station may determine, at 908, to transmit the FD RACH configuration indication based on a determination that the at least one UE is in one of an RRC connected state or an RRC idle state. Additionally, in some aspects, the base station may determine, at 908, to transmit the FD RACH configuration indication based on a determination that a four-step RACH procedure will be used by the at least one UE (or based on determination that a traffic type is eMMB) while the base station may determine, at 908, to transmit the HD RACH configuration indication, at 916, if a two-step RACH procedure will be used by the at least one UE (or based on a determination that a traffic type is URLLC) or vice versa.

For example, referring to FIG. 6, a UE 602 may transmit, and a base station 604 may receive, a UE capability indication 610 that the UE supports the FD RACH configuration (e.g., supports a FD mode of communication). Based on the UE capability indication 610, the base station may determine 612 that the UE can support the FD RACH configuration. The base station may then determine 614 to transmit the FD RACH configuration indication based on the determination 612 that the UE can support the FD RACH configuration and/or based on a determination of (1) the RRC state of the at least one UE, (2) the RACH type associated with the at least one UE, and/or (3) the type of communication associated with the at least one UE. For example, 906 and 908 may be performed by UE capability determination component 1542 of apparatus 1502. Additionally, 1002 may be performed by UE capability transmission component 1440 of apparatus 1402.

At 910, the base station may determine a threshold number of failed FD RACH procedure messages for the at least one UE before switching to a HD RACH procedure. In some aspects, the determination, at 910, is made based on base station or UE capabilities and/or a pre-configured threshold number of FD RACH message failures. The threshold, in some aspects, is determined as part of configuring, at 902, the FD RACH configuration. For example, 910 may be performed by RACH configuration component 1540 of apparatus 1502.

At 912, the base station may transmit, to at least one UE, an indication of the one or more RACH resources configured for the FD RACH configuration. For example, referring to FIGs. 5 and 6, the FD RACH configuration indication 616A may indicate a set of FD RACH occasions (e.g., sets of time-and-frequency resources configured for a FD RACH procedure) via which the UE 602 may transmit FD RACH messages. For example, referring to FIG. 5, the FD RACH configuration indication 616A may identify one or more FD RACH occasion 510 and the time-and-frequency resources configured for UL and DL during the FD RACH occasion 510. For example, 912 may be performed by RACH configuration indication transmission component 1544 of apparatus 1502.

The UE may receive, at 1004, the indication of the FD RACH configuration for one or more RACH resources for the FD RACH configuration indication from the base station. For example, referring to FIGs. 5 and 6, the UE 602 may receive FD RACH configuration indication 616A. The FD RACH configuration indication 616A may identify one or more FD RACH occasions 510 and the time-and-frequency resources configured for UL and DL during the FD RACH occasions 510. For example, 1004 may be performed by RACH configuration reception component 1442 of apparatus 1402.

At 914, the base station may transmit, to the at least one UE, an indication of the threshold determined at 910. In some aspects, the indication of the determined threshold is transmitted along with the FD RACH configuration indication at 912. The indication of the threshold, in some aspects, may indicate one of a set of pre-configured threshold values. The UE may receive, at 1006, the indication of a threshold number of failed FD RACH messages before switching to a HD RACH procedure from the base station. For example, referring to FIGs. 5 and 6, the base station may transmit the indication of the determined threshold to the UE 602 in FD RACH configuration indication 616A. The UE 602 may receive the FD RACH configuration indication 616A including the threshold indication to determine a threshold number of failed FD RACH messages before switching to a HD RACH procedure. For example, 914 may be performed by RACH configuration indication transmission component 1544 of apparatus 1502. Additionally, 1006 may be performed by RACH configuration reception component 1442 of apparatus 1402.

At 916, the base station may transmit, to the at least one UE, an indication of the set of RACH resources configured for the HD RACH configuration. In some aspects, the HD RACH configuration indication is transmitted along with the FD RACH configuration, at 912, via a (combined) RACH configuration indication. The UE may receive, at 1008, the indication of the HD RACH configuration for the set of RACH resources. For example, referring to FIGs. 5 and 6, the base station may transmit the HD RACH configuration indication to the UE 602 in HD RACH configuration indication 616B. The UE 602 may receive the HD RACH configuration indication 616B. The HD RACH configuration indication 616B may identify one or more HD RACH occasions 520 and the time-and-frequency resources configured for the HD RACH procedure during the HD RACH occasions 520. For example, 916 may be performed by RACH configuration indication transmission component 1544 of apparatus 1502. Additionally, 1008 may be performed by RACH configuration reception component 1442 of apparatus 1402.

The UE, at 1010 may select, based on the FD RACH configuration indication received at 1004, at least one RACH resource of the one or more RACH resources for the FD RACH configuration. The at least one RACH resource of the one or more RACH resources for the FD RACH configuration may be selected at 1010, in some aspects, based on at least one of (1) a traffic type (e.g., eMMB or URLLC), (2) a determination that a DL RSRP is above a threshold, or (3) an indication from the first base station of at least one FD RACH resource. For example, FD RACH resources (e.g., as opposed to HD RACH resources) may be selected, in some aspects if the traffic type is eMMB while HD RACH resources may be selected if the traffic type is URLLC (or vice versa). Additionally, in some aspects, FD RACH resources may be selected based on a determination that a DL RSRP is above a threshold (e.g., a threshold RSRP that will reduce the likelihood of self-interference based on the transmission of FD RACH messages from the UE). For example, referring to FIGs. 5 and 6, a UE 602 may select 618 at least one FD RACH resource (e.g., FD RACH resource 515 of FD RACH occasion 510) indicated in the FD RACH configuration indication 616A. For example, 1010 may be performed by RACH procedure component 1444 of apparatus 1402.

At 1012, the UE may transmit, to the first base station via the selected at least one (FD) RACH resource, at least one message of a (FD) RACH procedure based on the FD RACH configuration. The base station, at 918, may receive, from the at least one UE via the selected at least one (FD) RACH resource, at least one message of a (FD) RACH procedure based on the FD RACH configuration. In some aspects, the base station transmits, at 912-916, the FD RACH configuration indication, the threshold indication, and the HD RACH configuration indication to the at least one UE without a determination, at 908, that the at least one UE supports a FD RACH procedure and the base station identifies a RACH message received at 918 as a FD RACH message or a HD RACH messages based on a preamble or based on the specific resources that are associated with the FD RACH configuration or the HD RACH configuration. The indication transmitted, at 1002, that a UE supports the FD RACH configuration may be implicit as described above based on the RACH occasion and/or a preamble of the received RACH message being associated with a FD RACH configuration instead of a HD RACH configuration. For example, referring to FIGs. 5 and 6, the UE 602 may transmit a FD RACH message 620A via FD RACH resources 515 of a RACH occasion 510. The base station may receive the FD RACH message 620A (e.g., while transmitting DL transmission 620B) and determine based on receiving the FD RACH message, that the UE supports the FD RACH procedure. For example, 1012 may be performed by RACH procedure component 1444 of apparatus 1402. Additionally, 918 may be performed by RACH procedure component 1546 of apparatus 1502.

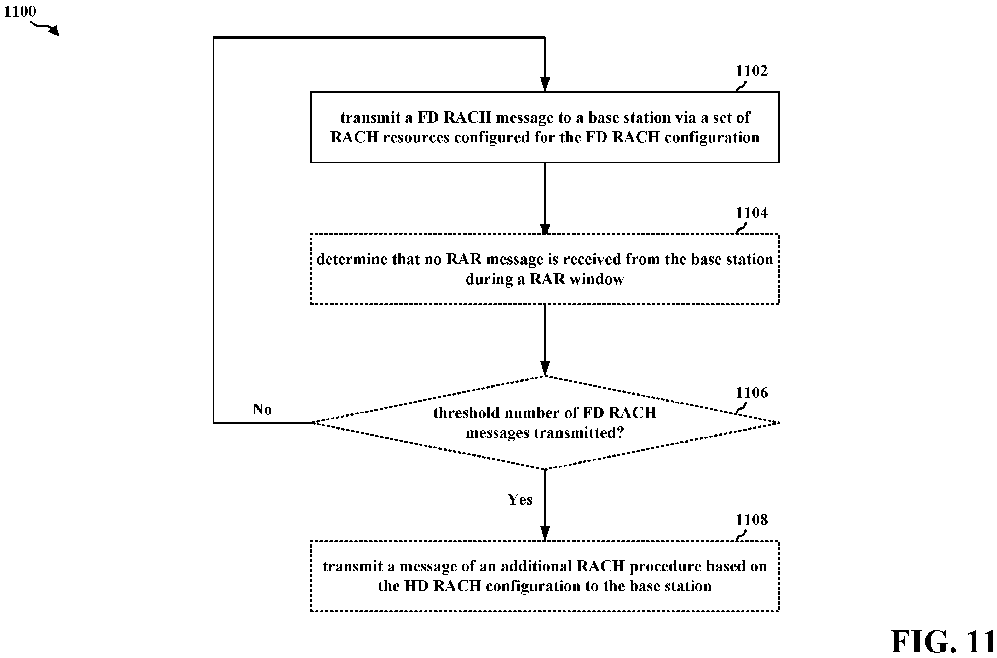

FIG. 11 is a flowchart 1100 of a method of wireless communication. The method may be performed by a UE (e.g., the UE 104; the UE 602/702/802; the apparatus 1402). Optional steps are indicated by dotted lines. At 1102, the UE may transmit a FD RACH message to a base station via the set of RACH resources configured for the FD RACH configuration. The FD RACH message may be a first message (e.g., a MsgA or a Msg1) in a RACH procedure. The FD RACH message may be transmitted based on the power control information (e.g., the initial transmission power and power ramping parameter) associated with the FD RACH configuration. For example, referring to FIG. 7, the UE 702 may transmit FD RACH message 706 to base station 704. For example, 1102 may be performed by a RACH procedure component 1444 of apparatus 1402.

At 1104, the UE may monitor, during a RAR window, for a RAR message from the base station and determine that no RAR message was received during the RAR window. Based on the determination, at 1104, the UE may determine that the FD RACH message failed (e.g., was not successfully received by the base station) and must be retransmitted. For example, referring to FIG. 7, the UE 702 may monitor for a RAR message during RAR window 710. Based on not receiving a RAR message, the UE 702 may determine 712 that the FD RACH message 706 was not successfully received by the base station 704. For example, 1104 may be performed by RACH procedure component 1444 of apparatus 1402.

The UE may determine, at 1106, whether a threshold number of FD RACH messages has been transmitted or retransmitted. The threshold may be received from a base station independently or included in an FD RACH configuration indication. The threshold number of FD RACH messages may be based on an initial transmission power, a power ramping parameter, and a maximum transmission power for the FD RACH procedure. If the UE determines, at 1106, that the threshold number of FD RACH messages have not been transmitted, the UE returns to 1102 to transmit an additional FD RACH message based on the FD RACH configuration and determine that no RAR message is received at 1104. For example, referring to FIG. 7, the UE 702 may determine that the threshold number of FD RACH messages have not been transmitted and may transmit the additional FD RACH message 714. The UE 702 may then monitor for a RAR message during RAR window 718 and determine that no RAR message has been received. For example, 1106 may be performed by a RACH procedure component 1444 of apparatus 1402.

If the UE determines, at 1106, that the threshold number of FD RACH messages have been transmitted, the UE may determine that the FD RACH procedure has failed and transmit, at 1108, at least one message of an additional RACH procedure based on the HD RACH configuration to the first base station via the set of RACH resources configured for the HD RACH configuration. For example, referring to FIG. 7, the UE 702 may determine 720 that no RAR message was received during RAR window 718 and that the FD RACH procedure failed. Based on determining 720 that the FD RACH procedure has failed, the UE 702 may transmit a HD RACH message 722. For example, 1108 may be performed by a RACH procedure component 1444 of apparatus 1402.

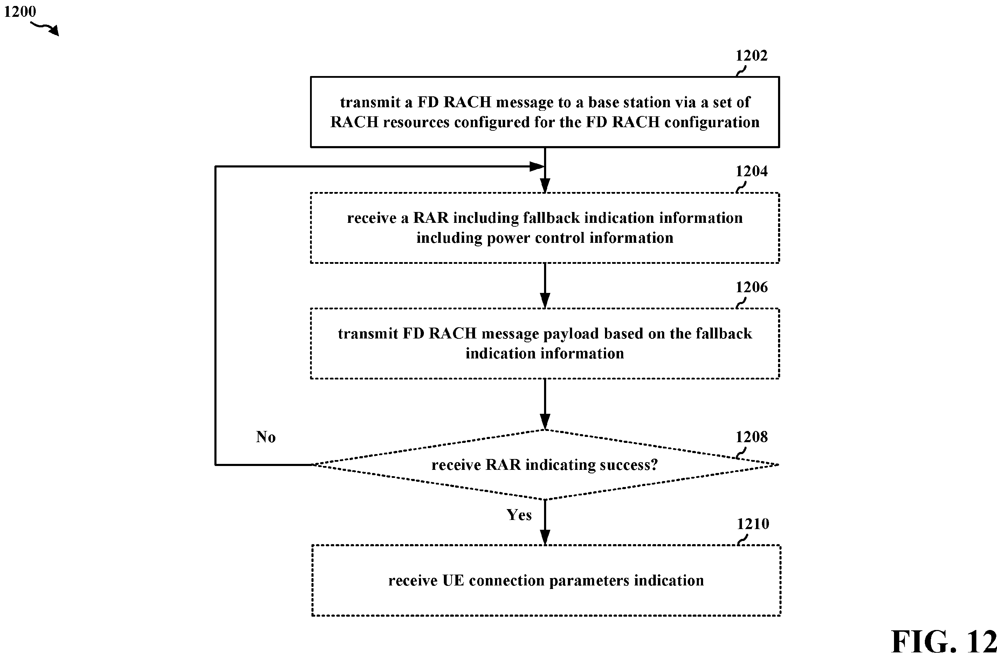

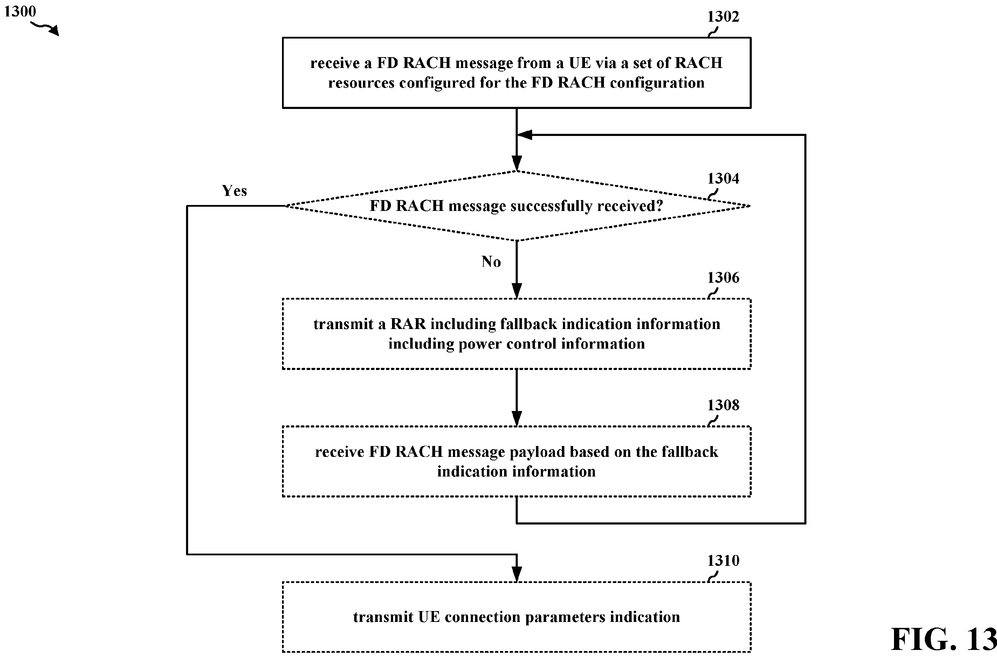

FIG. 12 is a flowchart 1200 of a method of wireless communication. The method may be performed by a UE (e.g., the UE 104; the UE 602/702/802; the apparatus 1402). FIG. 13 is a flowchart 1300 of a method of wireless communication. The method may be performed by a base station (e.g., the base station 102/180; the base station 604/704/804; the apparatus 1502). Optional steps are indicated by dotted lines. The following discussion will describe certain steps of FIGs. 12 and 13 together where they represent related steps (operations) performed by the UE (e.g., in FIG. 12) and the base station (e.g., in FIG. 13). At 1202, the UE may transmit a FD RACH message to a base station via the set of RACH resources configured for the FD RACH configuration. The FD RACH message of the RACH procedure may be a first FD RACH message (e.g., a MsgA or Msg1) that may include a preamble and a payload. The base station, at 1302 may receive the FD RACH message transmitted by the UE at 1202. For example, referring to FIG. 8, the UE 802 may transmit FD RACH message 806 (including FD RACH preamble 806A and FD RACH payload 806B) to base station 804. For example, 1202 may be performed by a RACH procedure component 1444 of apparatus 1402. Additionally, 1302 may be performed may be performed by RACH procedure component 1546 of apparatus 1502.

At 1304, the base station may determine if the FD RACH message was successfully received (e.g., decoded). In some aspects, the base station may be able to identify a FD RACH preamble but be unable to decode a payload of the FD RACH message. Based on receiving the preamble but being unable to decode a payload, the base station, at 1306, may transmit a RAR including fallback indication information (e.g., a fallback indication bit) indicating that the payload was not decoded. The fallback indication information may also indicate power control information. For example, the power control indication may indicate to the UE a higher transmission power for a subsequent payload transmission (e.g., based on the initial transmission power and a power ramping parameter associated with the FD RACH configuration). For example, referring to FIG. 8, the base station may determine 808 to instruct the UE to transmit the FD RACH payload 806B with a different (e.g., higher) transmission power based on a determination (e.g., at 1304) that the FD RACH message payload 806B was not successfully received. Based on the determination 808, the base station may transmit the FD RACH RAR message with a fallback indication bit indicating the payload was not decoded (and power control information). For example, 1304 and 1306 may be performed by RACH procedure component 1546 of apparatus 1502.

At 1204, the UE may receive, from the base station, the RAR transmitted at 1306 including the fallback indication information indicating that the payload was not decoded. The fallback indication information may also indicate power control information (e.g., the fallback bit may indicate a next transmission power based on a power ramping parameter). Based on the fallback indication, the UE may (re)transmit, at 1206, the FD RACH message payload with a different transmission power. For example, referring to FIG.8, the UE 802 may receive FD RACH RAR with fallback information 810, determine 812 a transmission power for the FD RACH (re)transmission, and (re)transmit the FD RACH payload 814 based on the determined transmission power. For example, 1204 and 1206 may be performed by RACH procedure component 1444 of apparatus 1402.

The base station, at 1308, may receive, from the UE, the (re)transmitted, at 1206, FD RACH payload based on the fallback indication bit. The base station may determine, at 1304 whether the FD RACH message (e.g., payload) is successfully received. If the FD RACH message (or payload) is determined, at 1304, to have been successfully received, the base station may transmit, at 1310, a UE connection parameters indication. The UE connection parameters indication may include one of (1) an indication that the at least one UE is allowed to transmit UL data at a configured transmission power at a same time as the base station transmits DL data or (2) an indication that the at least one UE is not allowed to transmit UL data at a same time as the base station transmits DL data. The UE connection parameters indication may be transmitted via one of DCI, an RRC message, or a RAR indicating the success of the FD RACH procedure. The UE may receive, at 1210, the UE connection parameters indication.

For example, referring to FIGs. 6 and 8, the base station 604/804 may receive the (re)transmitted FD RACH payload 814 and may transmit (e.g., at 1310), and the UE 602/604 may receive (e.g., at 1210), the UE connection parameters indication 624. The UE communication parameters indication 624 may include an indication that the UE 602 is allowed (or is not allowed) to communicate in a FD mode. In some aspects, the UE communication parameters indication 624 may also include an indication of the configured (e.g., reduced) UL transmission power determined 622 by the base station 604. The UE communication parameters indication 624 may include an indication that the UE 602 may receive DL transmissions from base station 604 while transmitting UL transmissions (e.g., RACH messages) to a second base station (e.g., during a handover procedure). Additionally, the UE communication parameters indication 624 may include an indication of a relative (e.g., higher or lower) priority of transmitting UL transmissions and receiving DL transmission in resources associated with one or more of a configured grant, a dynamic grant, SRS, a PUCCH, and a PUSCH. The UE communication parameters indication 624, in some aspects, may include an indication that the UE 602 in an RRC idle state may simultaneously receive DL transmissions from base station 604 and transmit UL transmissions to base station 604 when transitioning to an RRC connected state. For example, 1208 and 1210 may be performed by a RACH procedure component 1444 of apparatus 1402. Additionally, 1308 and 1310 may be performed may be performed by RACH procedure component 1546 of apparatus 1502.

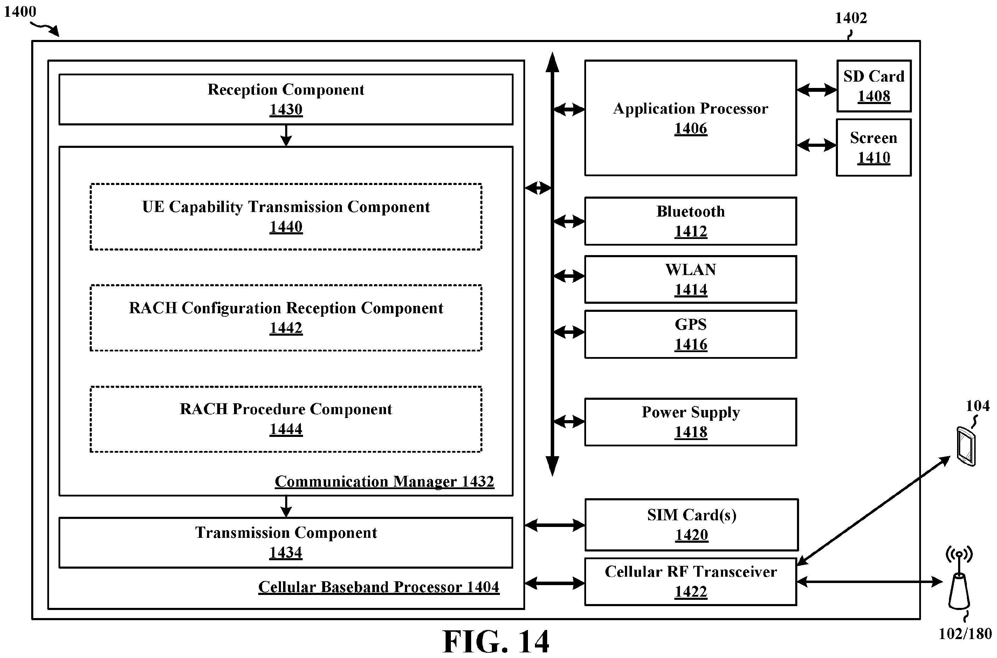

FIG. 14 is a diagram 1400 illustrating an example of a hardware implementation for an apparatus 1402. The apparatus 1402 is a UE and includes a cellular baseband processor 1404 (also referred to as a modem) coupled to a cellular RF transceiver 1422 and one or more subscriber identity modules (SIM) cards 1420, an application processor 1406 coupled to a secure digital (SD) card 1408 and a screen 1410, a Bluetooth module 1412, a wireless local area network (WLAN) module 1414, a Global Positioning System (GPS) module 1416, and a power supply 1418. The cellular baseband processor 1404 communicates through the cellular RF transceiver 1422 with the UE 104 and/or BS 102/180. The cellular baseband processor 1404 may include a computer-readable medium / memory. The computer-readable medium / memory may be non-transitory. The cellular baseband processor 1404 is responsible for general processing, including the execution of software stored on the computer-readable medium / memory. The software, when executed by the cellular baseband processor 1404, causes the cellular baseband processor 1404 to perform the various functions described *supra.* The computer-readable medium / memory may also be used for storing data that is manipulated by the cellular baseband processor 1404 when executing software. The cellular baseband processor 1404 further includes a reception component 1430, a communication manager 1432, and a transmission component 1434. The communication manager 1432 includes the one or more illustrated components. The components within the communication manager 1432 may be stored in the computer-readable medium / memory and/or configured as hardware within the cellular baseband processor 1404. The cellular baseband processor 1404 may be a component of the UE 350 and may include the memory 360 and/or at least one of the TX processor 368, the RX processor 356, and the controller/processor 359. In one configuration, the apparatus 1402 may be a modem chip and include just the baseband processor 1404, and in another configuration, the apparatus 1402 may be the entire UE (e.g., see 350 of FIG. 3) and include the aforediscussed additional modules of the apparatus 1402.

The communication manager 1432 includes a UE capability transmission component 1440 that is configured to transmit, to the first base station, an indication of a capability of the at least one UE indicating that the at least one UE supports the FD RACH configuration, e.g., as described in connection with 1002 of FIG. 10. The communication manager 1432 further includes a RACH configuration reception component 1442 that receives input in the form of a FD RACH configuration indication, an indication of a threshold number of failed FD RACH messages before switching to a HD RACH procedure, and/or a HD RACH configuration indication from a base station component and is configured to receive, from a first base station, an indication of a FD RACH configuration for one or more RACH resources and/or receive, from the first base station, an indication of a HD RACH configuration for a set of RACH resources, e.g., as described in connection with 1004-1008 of FIG. 10. The communication manager 1432 further includes a RACH procedure component 1444 that receives input in the form of a FD RACH configuration indication and a HD RACH configuration indication from the RACH configuration reception component 1442 and is configured to select, based on the received FD RACH configuration indication, at least one RACH resource of the one or more RACH resources for the FD RACH configuration and perform the RACH procedure via the selected at least one RACH resource, e.g., as described in connection with 1010 and 1012 of FIG. 10, 1102-1108 of FIG. 11, and 1202-1210 of FIG. 12.

The apparatus may include additional components that perform each of the blocks of the algorithm in the aforementioned flowcharts of FIGs. 10-12. As such, each block in the aforementioned flowcharts of FIGs. 10-12 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1402, and in particular the cellular baseband processor 1404, includes means for receiving, from a first base station, an indication of a FD RACH configuration for one or more RACH resources. In one configuration, the apparatus 1402, and in particular the cellular baseband processor 1404, may further include means for transmitting, to the first base station, an indication of a capability of the at least one UE indicating that the at least one UE supports the FD RACH configuration. In one configuration, the apparatus 1402, and in particular the cellular baseband processor 1404, may further include means for receiving, from the first base station, an indication of a threshold number of failed FD RACH messages before switching to a HD RACH procedure. In one configuration, the apparatus 1402, and in particular the cellular baseband processor 1404, may further include means for receiving, from the first base station, an indication of a HD RACH configuration for a set of RACH resources. In one configuration, the apparatus 1402, and in particular the cellular baseband processor 1404, further includes means for selecting, based on the received indication, at least one RACH resource of the one or more RACH resources for the FD RACH configuration. In one configuration, the apparatus 1402, and in particular the cellular baseband processor 1404, further includes means for transmitting, to the first base station via the selected at least one RACH resource, at least one message of a RACH procedure based on the FD RACH configuration. In one configuration, the apparatus 1402, and in particular the cellular baseband processor 1404, may further include means for receiving a RAR including fallback indication information indicating that the payload was not decoded, the fallback indication information further indicating power control information. In one configuration, the apparatus 1402, and in particular the cellular baseband processor 1404, may further include means for retransmitting the payload based on the fallback indication information. In one configuration, the apparatus 1402, and in particular the cellular baseband processor 1404, may further include means for transmitting, to the first base station via the set of RACH resources configured for the FD RACH configuration, the threshold number of failed FD RACH messages. In one configuration, the apparatus 1402, and in particular the cellular baseband processor 1404, may further include means for transmitting, to the first base station via the set of RACH resources configured for the HD RACH configuration, at least one message of an additional RACH procedure based on the HD RACH configuration based on the threshold number of failed FD RACH messages being transmitted. In one configuration, the apparatus 1402, and in particular the cellular baseband processor 1404, may further include means for receiving, from the first base station, an indication that one of (1) the UE is allowed to transmit UL data at a configured transmission power at a same time as the UE receives DL transmissions from the first base station or (2) the UE is not allowed to transmit UL data at a same time as the UE receives DL transmissions from the first base station. In one configuration, the apparatus 1402, and in particular the cellular baseband processor 1404, may further include means for transmitting, to a second base station via the one or more RACH resources, at least one message of a second RACH procedure based on the FD RACH configuration, where the at least one message of the second RACH procedure is transmitted while receiving a DL transmission from the first base station. The aforementioned means may be one or more of the aforementioned components of the apparatus 1402 configured to perform the functions recited by the aforementioned means. As described *supra,* the apparatus 1402 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

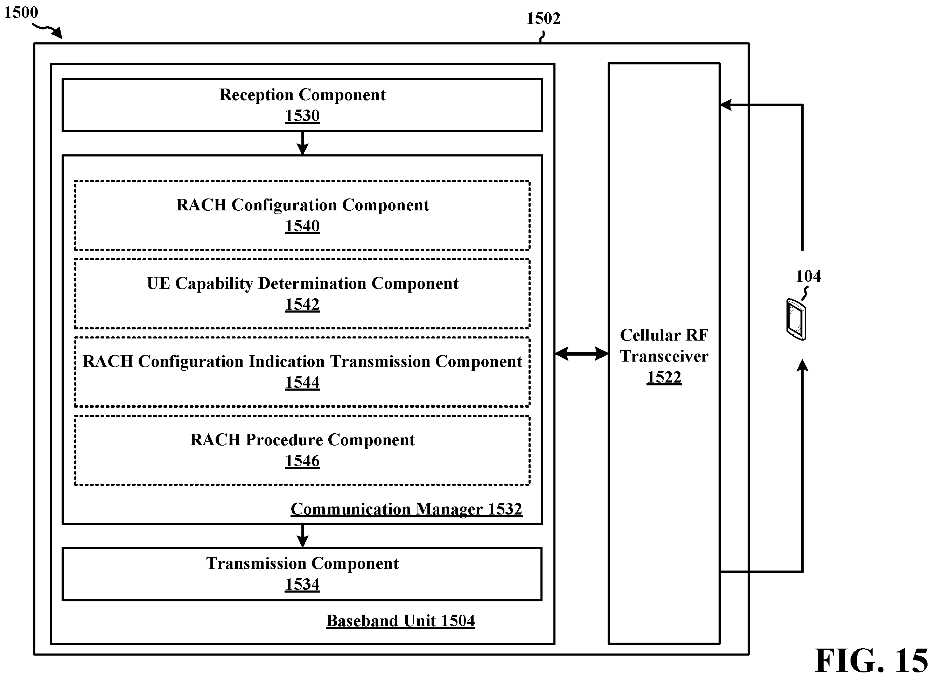

FIG. 15 is a diagram 1500 illustrating an example of a hardware implementation for an apparatus 1502. The apparatus 1502 is a BS and includes a baseband unit 1504. The baseband unit 1504 may communicate through a cellular RF transceiver 1522 with the UE 104. The baseband unit 1504 may include a computer-readable medium / memory. The baseband unit 1504 is responsible for general processing, including the execution of software stored on the computer-readable medium / memory. The software, when executed by the baseband unit 1504, causes the baseband unit 1504 to perform the various functions described *supra.* The computer-readable medium / memory may also be used for storing data that is manipulated by the baseband unit 1504 when executing software. The baseband unit 1504 further includes a reception component 1530, a communication manager 1532, and a transmission component 1534. The communication manager 1532 includes the one or more illustrated components. The components within the communication manager 1532 may be stored in the computer-readable medium / memory and/or configured as hardware within the baseband unit 1504. The baseband unit 1504 may be a component of the BS 310 and may include the memory 376 and/or at least one of the TX processor 316, the RX processor 370, and the controller/processor 375.

The communication manager 1532 includes a RACH configuration component 1540 that may be configured to configure one or more RACH resources for a FD RACH configuration, determine a threshold number of failed FD RACH procedure messages for the at least one UE before switching to a HD RACH procedure, and configure a set of RACH resources for a HD RACH configuration, e.g., as described in connection with 902, 904, and 910 of FIG. 9. The communication manager 1532 further includes a UE capability determination component 1542 that may be configured to receive an indication of a capability of the UE indicating that the UE supports the FD RACH configuration and/or to determine to transmit the FD RACH configuration indication to the at least one UE, e.g., as described in connection with 906 and 908 of FIG. 9. The communication manager 1532 further includes a RACH configuration indication transmission component 1544 that may be configured to receive the FD RACH configuration, the determined threshold number of failed FD RACH procedure messages, the HD RACH configuration, and the determination to transmit the FD RACH configuration indication to the at least one UE and may transmit the FD RACH configuration indication, the indication of the threshold number of failed FD RACH procedure messages, and/or the HD RACH configuration indication, e.g., as described in connection with 912, 914, and 916 of FIG. 9. The communication manager 1532 further includes a RACH procedure component 1546 that may be configured to receive, from the at least one UE via the selected at least one FD RACH resource, at least one message of a FD RACH procedure based on the FD RACH configuration; determine if the FD RACH message was successfully received (e.g., decoded); transmit a RAR including fallback indication information indicating that the payload was not decoded; receive, from the UE, the (re)transmitted FD RACH payload based on the fallback indication bit; transmit, to at least one UE, a UE connection parameters indication, e.g., as described in connection with 1302-1310 of FIG. 13.

The apparatus may include additional components that perform each of the blocks of the algorithm in the aforementioned flowcharts of FIGs. 9 and 13. As such, each block in the aforementioned flowcharts of FIGs. 9 and 13 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1502, and in particular the baseband unit 1504, includes means for configuring one or more RACH resources for a FD RACH configuration. In one configuration, the apparatus 1502, and in particular the baseband unit 1504, may further include means for configuring a set of RACH resources for a HD RACH configuration. In one configuration, the apparatus 1502, and in particular the baseband unit 1504, may further include means for receiving, from the at least one UE, an indication of a capability of the at least one UE indicating that the at least one UE supports the FD RACH configuration. In one configuration, the apparatus 1502, and in particular the baseband unit 1504, further includes means for transmitting, to at least one UE, an indication of the one or more RACH resources configured for the FD RACH configuration. In one configuration, the apparatus 1502, and in particular the baseband unit 1504, may further include means for transmitting, to the at least one UE, an indication of the set of RACH resources configured for the HD RACH configuration. In one configuration, the apparatus 1502, and in particular the baseband unit 1504, further includes means for determining a threshold number of failed FD RACH procedure messages for the at least one UE before switching to a HD RACH procedure. In one configuration, the apparatus 1502, and in particular the baseband unit 1504, further includes means for transmitting, to the at least one UE, an indication of the determined threshold. In one configuration, the apparatus 1502, and in particular the baseband unit 1504, further includes means for receiving, from the at least one UE via the one or more RACH resources, at least one message of a RACH procedure based on the FD RACH configuration. In one configuration, the apparatus 1502, and in particular the baseband unit 1504, further includes means for receiving, from the at least one UE via the set of RACH resources configured for the HD RACH configuration, at least one message of a RACH procedure based on the HD RACH configuration after a threshold number of failed FD RACH procedure messages transmitted by the at least one UE. In one configuration, the apparatus 1502, and in particular the baseband unit 1504, may further include means for determining an RRC state of the at least one UE. In one configuration, the apparatus 1502, and in particular the baseband unit 1504, may further include means for determining a RACH type associated with the at least one UE. In one configuration, the apparatus 1502, and in particular the baseband unit 1504, may further include means for determining a type of communication associated with the at least one UE. In one configuration, the apparatus 1502, and in particular the baseband unit 1504, may further include means for transmitting a RAR including fallback indication information indicating that the payload was not decoded. In one configuration, the apparatus 1502, and in particular the baseband unit 1504, may further include means for receiving a retransmission of the payload based on the fallback indication information. In one configuration, the apparatus 1502, and in particular the baseband unit 1504, may further include means for transmitting one of (1) an indication that the at least one UE is allowed to transmit UL data at a configured transmission power at a same time as the base station transmits DL data or (2) an indication that the at least one UE is not allowed to transmit UL data at a same time as the base station transmits DL data. The aforementioned means may be one or more of the aforementioned components of the apparatus 1502 configured to perform the functions recited by the aforementioned means. As described supra, the apparatus 1502 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

In some aspects of wireless communication, e.g., 5G NR, FD communication is enabled. In FD communication some time-domain resources (e.g., slots) may include both DL and UL transmissions, e.g., in overlapping frequency bands (e.g., IBFD) or in adjacent frequency bands (e.g., SBFD). It may be beneficial to utilize FD resources for RACH procedures as well as HD resources.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

The following aspects are illustrative only and may be combined with other aspects or teachings described herein, without limitation.

Aspect 1 is a method of wireless communication at a UE, including receiving, from a first base station, an indication of a FD RACH configuration for one or more RACH resources; selecting, based on the received indication, at least one RACH resource of the one or more RACH resources for the FD RACH configuration; and transmitting, to the first base station via the selected at least one RACH resource, at least one message of a RACH procedure based on the FD RACH configuration.

Aspect 2 is the method of aspect 1, further including receiving, from the first base station, an indication of a HD RACH configuration for a set of RACH resources, where the FD RACH configuration includes a first power configuration and the HD RACH configuration includes a second power configuration, the first power configuration includes at least one of a first initial power parameter or a first power ramping parameter, the second power configuration including at least one of a second initial power parameter or a second power ramping parameter, and at least one of (1) the first initial power parameter is different from the second initial power parameter or (2) the first power ramping parameter is different from the second power ramping parameter.

Aspect 3 is the method of aspect 2, further including receiving, from the first base station, an indication of a threshold number of failed FD RACH messages before switching to a HD RACH procedure; transmitting, to the first base station via the set of RACH resources configured for the FD RACH configuration, the threshold number of failed FD RACH messages; and transmitting, to the first base station via the set of RACH resources configured for the HD RACH configuration, at least one message of an additional RACH procedure based on the HD RACH configuration based on the threshold number of failed FD RACH messages being transmitted.

Aspect 4 is the method of any of aspects 1 to 3, further including receiving, from the first base station, an indication of a HD RACH configuration for a set of RACH resources, where at least one of (1) a first set of preambles associated with the FD RACH configuration is distinct from a second set of preambles associated with and the HD RACH configuration and (2) the one or more RACH resources associated with the FD RACH configuration are distinct from the set of RACH resources associated with the HD RACH configuration, where the one or more resources associated with the FD RACH configuration include at least one FD RACH occasion that overlaps with a scheduled DL transmission.

Aspect 5 is the method of any of aspects 1 to 4, further including transmitting, to the first base station, an indication of a capability of the at least one UE indicating that the at least one UE supports the FD RACH configuration, where the indication of the one or more RACH resources configured for the FD RACH configuration is received based on the transmitted indication.

Aspect 6 is the method of any of aspects 1 to 5, where the indication of the one or more RACH resources configured for the FD RACH configuration is received via one of SI or RRC signaling.

Aspect 7 is the method of any of aspects 1 to 6, where the one or more RACH resources include one or more of contention-based RACH resources and contention-free RACH resources, where the indication of the one or more RACH resources is received via an RRC message.

Aspect 8 is the method of any of aspects 1 to 7, where the indication of the one or more RACH resources configured for the FD RACH configuration is received based on the RRC state of the UE.

Aspect 9 is the method of any of aspects 1 to 8, where the indication of the one or more RACH resources configured for the FD RACH configuration is received based on a RACH type associated with the UE.

Aspect 10 is the method of any of aspects 1 to 9, where the indication of the one or more RACH resources configured for the FD RACH configuration is received based on a type of communication associated with communication between the UE and the first base station.

Aspect 11 is the method of any of aspects 1 to 10, where the at least one message of the RACH procedure includes a preamble and a payload, the method further including receiving a RAR including fallback indication information indicating that the payload was not decoded, the fallback indication information further indicating power control information; and retransmitting the payload based on the fallback indication information.

Aspect 12 is the method of any of aspects 1 to 11, further including receiving, from the first base station, an indication that one of (1) the UE is allowed to transmit UL data at a configured transmission power at a same time as the UE receives DL transmissions from the first base station or (2) the UE is not allowed to transmit UL data at a same time as the UE receives DL transmissions from the first base station, where the indication is transmitted in one of DCI or in a RAR indicating success of the RACH procedure.

Aspect 13 is the method of aspect 12, where an indication of the reduced transmission power is at least one of (1) a reduced transmission power received via (i) L1 signaling or (ii) dedicated RRC signaling or (2) a pre-configured reduced power transmission.

Aspect 14 is the method of any of aspects 12 and 13, further including, based on receiving an indication that the UL is allowed to transmit UL data at a configured transmission power at a same time as the UE receives DL transmissions from the first base station transmitting, to a second base station via the one or more RACH resources, at least one message of a second RACH procedure based on the FD RACH configuration, where the at least one message of the second RACH procedure is transmitted while receiving a DL transmission from the first base station.

Aspect 15 is the method of any of aspects 1 to 14, where selecting at least one RACH resource of the one or more RACH resources for the FD RACH configuration includes selecting the at least one RACH resource based on at least one of (1) a traffic type, (2) a determination that a DL RSRP is above a threshold, or (3) an indication from the first base station.

Aspect 16 is a method of wireless communication at a base station, including configuring one or more RACH resources for a FD RACH configuration; transmitting, to at least one UE, an indication of the one or more RACH resources configured for the FD RACH configuration; and receiving, from the at least one UE via the one or more RACH resources, at least one message of a RACH procedure based on the FD RACH configuration.

Aspect 17 is the method of aspect 16, further including configuring a set of RACH resources for a HD RACH configuration; and transmitting, to the at least one UE, an indication of the set of RACH resources configured for the HD RACH configuration, where the FD RACH configuration includes a first power configuration and the HD RACH configuration includes a second power configuration, the first power configuration including at least one of a first initial power parameter or a first power ramping parameter, the second power configuration including at least one of a second initial power parameter or a second power ramping parameter, and at least one of (1) the first initial power parameter is different from the second initial power parameter or (2) the first power ramping parameter is different from the second power ramping parameter.

Aspect 18 is the method of aspect 17, further including determining a threshold number of failed FD RACH procedure messages for the at least one UE before switching to a HD RACH procedure; transmitting, to the at least one UE, an indication of the determined threshold; and receiving, from the at least one UE via the set of RACH resources configured for the HD RACH configuration, at least one message of a RACH procedure based on the HD RACH configuration after a threshold number of failed FD RACH procedure messages transmitted by the at least one UE.

Aspect 19 is the method of any of aspects 16 to 18, further including configuring a set of RACH resources for a HD RACH configuration, where at least one of (1) a first set of preambles associated with the FD RACH configuration is distinct from a second set of preambles associated with and the HD RACH configuration and (2) the one or more RACH resources associated with the FD RACH configuration are distinct from the set of RACH resources associated with the HD RACH configuration, where the one or more resources associated with the FD RACH configuration include at least one FD RACH occasion that overlaps with a scheduled DL transmission.

Aspect 20 is the method of any of aspects 16 to 19, further including receiving, from the at least one UE, an indication of a capability of the at least one UE indicating that the at least one UE supports the FD RACH configuration, where the indication of the one or more RACH resources configured for the FD RACH configuration is transmitted based on the received indication.

Aspect 21 is the method of any of aspects 16 to 20, where the indication of the one or more RACH resources configured for the FD RACH configuration is transmitted via one of SI or RRC signaling.

Aspect 22 is the method of any of aspects 16 to 21, where the one or more RACH resources include one or more of contention-based RACH resources and contention-free RACH resources, where the indication of the one or more RACH resources is transmitted via an RRC message

Aspect 23 is the method of any of aspects 16 to 22, further including determining an RRC state of the at least one UE, where the indication of the one or more RACH resources configured for the FD RACH configuration is transmitted based on the determination of the RRC state of the at least one UE.

Aspect 24 is the method of any of aspects 16 to 23, further including determining a RACH type associated with the at least one UE, where the indication of the one or more RACH resources configured for the FD RACH configuration is transmitted based on the determined RACH type.

Aspect 25 is the method of any of aspects 16 to 24, further including determining a type of communication associated with the at least one UE, where the indication of the one or more RACH resources configured for the FD RACH configuration is transmitted based on the determination of the type of communication associated with the at least one UE.

Aspect 26 is the method of any of aspects 16 to 25, where the at least one message of the RACH procedure includes a preamble and a payload, the method further including transmitting a RAR including fallback indication information indicating that the payload was not decoded, the fallback indication information further indicating power control information; and receiving a retransmission of the payload based on the fallback indication information.

Aspect 27 is the method of any of aspects 16 to 25, further including transmitting one of (1) an indication that the at least one UE is allowed to transmit UL data at a reduced transmission power at a same time as the base station transmits DL data or (2) an indication that the at least one UE is not allowed to transmit UL data at a same time as the base station transmits DL data, where the indication is transmitted in one of DCI or in a RAR indicating success of the RACH procedure.

Aspect 28 is the method of aspect 27, where an indication of the reduced transmission power is at least one of (1) a reduced transmission power received via (i) L1 signaling or (ii) dedicated RRC signaling or (2) a pre-configured reduced power transmission.

Aspect 29 is an apparatus for wireless communication including at least one processor coupled to a memory and configured to implement a method as in any of aspects 1 to 28.

Aspect 30 is an apparatus for wireless communication including means for implementing a method as in any of aspects 1 to 28.

Aspect 31 is a computer-readable medium storing computer executable code, where the code when executed by a processor causes the processor to implement a method as in any of aspects 1 to 28.

## Claims

1. An apparatus for wireless communication at a user equipment (UE), comprising:
a memory; and
at least one processor coupled to the memory and configured to:
receive, from a first base station, an indication of a full duplex (FD) random access channel (RACH) configuration for one or more RACH resources;
receive, from the first base station, an indication of a threshold number of failed FD RACH messages before switching to a HD RACH procedure;
receive, from the first base station, an indication of a half duplex (HD) RACH configuration for a set of RACH resources;
select, based on the received indication of the full duplex (FD) random access channel (RACH) configuration, at least one RACH resource of the one or more RACH resources for the FD RACH configuration;
transmit, to the first base station via the selected at least one RACH resource, at least one message of a RACH procedure based on the FD RACH configuration;
transmit, to the first base station via the set of RACH resources configured for the FD RACH configuration, the threshold number of failed FD RACH messages; and
transmit, to the first base station via the set of RACH resources configured for the HD RACH configuration, at least one message of an additional RACH procedure based on the HD RACH configuration based on the threshold number of failed FD RACH messages being transmitted, wherein:
the FD RACH configuration comprises a first power configuration and the HD RACH configuration comprises a second power configuration,
the first power configuration comprises at least one of a first initial power parameter or a first power ramping parameter,
the second power configuration comprises at least one of a second initial power parameter or a second power ramping parameter, and
at least one of (1) the first initial power parameter is different from the second initial power parameter or (2) the first power ramping parameter is different from the second power ramping parameter.

2. The apparatus of claim 1, wherein at least one of (1) a first set of preambles associated with the FD RACH configuration is distinct from a second set of preambles associated with and the HD RACH configuration and (2) the one or more RACH resources associated with the FD RACH configuration are distinct from the set of RACH resources associated with the HD RACH configuration, wherein the one or more resources associated with the FD RACH configuration comprise at least one FD RACH occasion that overlaps with a scheduled downlink (DL) transmission.

3. The apparatus of claim 1, wherein the at least one processor is further configured to transmit, to the first base station, an indication of a capability of the at least one UE indicating that the at least one UE supports the FD RACH configuration, wherein the indication of the one or more RACH resources configured for the FD RACH configuration is received based on the transmitted indication.

4. The apparatus of claim 1, wherein the indication of the one or more RACH resources configured for the FD RACH configuration is received via one of system information (SI) or radio resource control (RRC) signaling.

5. The apparatus of claim 1, wherein the one or more RACH resources comprise one or more of contention-based RACH resources and contention-free RACH resources, wherein the indication of the one or more RACH resources is received via an RRC message.

6. The apparatus of claim 1, wherein the indication of the one or more RACH resources configured for the FD RACH configuration is received based on a RACH type associated with the UE.

7. The apparatus of claim 1, wherein the indication of the one or more RACH resources configured for the FD RACH configuration is received based on a type of communication associated with communication between the UE and the first base station.

8. The apparatus of claim 1, wherein the at least one message of the RACH procedure comprises a preamble and a payload, the at least one processor being further configured to:
receive a random access response (RAR) including fallback indication information indicating that the payload was not decoded, the fallback indication information further indicating power control information; and
retransmit the payload based on the fallback indication information.

9. The apparatus of claim 1, wherein the at least one processor is further configured to receive, from the first base station, an indication that one of (1) the UE is allowed to transmit uplink (UL) data at a configured transmission power at a same time as the UE receives downlink (DL) transmissions from the first base station or (2) the UE is not allowed to transmit UL data at a same time as the UE receives DL transmissions from the first base station, wherein the indication is transmitted in one of DL control information (DCI) or in a random access response (RAR) indicating success of the RACH procedure.

10. The apparatus of claim 9, wherein an indication of the configured transmission power is at least one of (1) a reduced transmission power received via (i) L1 signaling or (ii) dedicated radio resource control (RRC) signaling or (2) a pre-configured reduced power transmission.

11. The apparatus of claim 9, wherein the at least one processor is further configured to transmit, to a second base station via the one or more RACH resources, at least one message of a second RACH procedure based on the FD RACH configuration, wherein the at least one message of the second RACH procedure is transmitted while receiving a DL transmission from the first base station, wherein the transmission to the second base station is based on receiving an indication that the UL is allowed to transmit UL data at a configured transmission power at a same time as the UE receives DL transmissions from the first base station.

12. The apparatus of claim 1, wherein selecting at least one RACH resource of the one or more RACH resources for the FD RACH configuration comprises selecting the at least one RACH resource based on at least one of (1) a traffic type, (2) a determination that a downlink (DL) reference signal received power (RSRP) is above a threshold, or (3) an indication from the first base station.

13. An apparatus for wireless communication at a base station, comprising:
a memory; and
at least one processor coupled to the memory and configured to:
configure one or more random access channel (RACH) resources for a full duplex (FD) RACH configuration;
configure a set of RACH resources for a half duplex (HD) RACH configuration;
transmit, to at least one user equipment (UE), an indication of the one or more RACH resources configured for the FD RACH configuration;
transmit, to the at least one UE, an indication of the set of RACH resources configured for the HD RACH configuration;
determine a threshold number of failed FD RACH procedure messages for the at least one UE before switching to a HD RACH procedure;
transmit, to the at least one UE, an indication of the determined threshold;
receive, from the at least one UE via the one or more RACH resources, at least one message of a RACH procedure based on the FD RACH configuration; and
receive, from the at least one UE via the set of RACH resources configured for the HD RACH configuration, at least one message of a RACH procedure based on the HD RACH configuration after a threshold number of failed FD RACH procedure messages transmitted by the at least one UE, wherein:
the FD RACH configuration comprises a first power configuration and the HD RACH configuration comprises a second power configuration,
the first power configuration comprises at least one of a first initial power parameter or a first power ramping parameter,
the second power configuration comprises at least one of a second initial power parameter or a second power ramping parameter, and
at least one of (1) the first initial power parameter is different from the second initial power parameter or (2) the first power ramping parameter is different from the second power ramping parameter.

14. A method of wireless communication at a user equipment (UE), comprising:
receiving, from a first base station, an indication of a full duplex (FD) random access channel (RACH) configuration for one or more RACH resources;
receiving, from the first base station, an indication of a threshold number of failed FD RACH messages before switching to a HD RACH procedure;
receiving, from the first base station, an indication of a half duplex (HD) RACH configuration for a set of RACH resources;
selecting, based on the received indication of the full duplex (FD) random access channel (RACH) configuration, at least one RACH resource of the one or more RACH resources for the FD RACH configuration;
transmitting, to the first base station via the selected at least one RACH resource, at least one message of a RACH procedure based on the FD RACH configuration;
transmitting, to the first base station via the set of RACH resources configured for the FD RACH configuration, the threshold number of failed FD RACH messages; and
transmitting, to the first base station via the set of RACH resources configured for the HD RACH configuration, at least one message of an additional RACH procedure based on the HD RACH configuration based on the threshold number of failed FD RACH messages being transmitted, wherein:
the FD RACH configuration comprises a first power configuration and the HD RACH configuration comprises a second power configuration,
the first power configuration comprises at least one of a first initial power parameter or a first power ramping parameter,
the second power configuration comprises at least one of a second initial power parameter or a second power ramping parameter, and
at least one of (1) the first initial power parameter is different from the second initial power parameter or (2) the first power ramping parameter is different from the second power ramping parameter.

15. A method of wireless communication at a base station, comprising:
configuring one or more random access channel (RACH) resources for a full duplex (FD) RACH configuration;
configuring a set of RACH resources for a half duplex (HD) RACH configuration;
transmitting, to at least one user equipment (UE), an indication of the one or more RACH resources configured for the FD RACH configuration;
transmitting, to the at least one UE, an indication of the set of RACH resources configured for the HD RACH configuration;
determining a threshold number of failed FD RACH procedure messages for the at least one UE before switching to a HD RACH procedure;
transmitting, to the at least one UE, an indication of the determined threshold;
receiving, from the at least one UE via the one or more RACH resources, at least one message of a RACH procedure based on the FD RACH configuration;
receiving, from the at least one UE via the set of RACH resources configured for the HD RACH configuration, at least one message of a RACH procedure based on the HD RACH configuration after a threshold number of failed FD RACH procedure messages transmitted by the at least one UE, wherein:
the FD RACH configuration comprises a first power configuration and the HD RACH configuration comprises a second power configuration,
the first power configuration comprises at least one of a first initial power parameter or a first power ramping parameter,
the second power configuration comprises at least one of a second initial power parameter or a second power ramping parameter, and
at least one of (1) the first initial power parameter is different from the second initial power parameter or (2) the first power ramping parameter is different from the second power ramping parameter.
